# EUROPÄISCHE PATENTANMELDUNG

(11) **EP 1 050 359 A2**
(43) Veröffentlichungstag der Anmeldung: **08.11.2000**
(21) Anmeldenummer: 00106600.0
(22) Anmeldetag: 28.03.2000
(51) Int. Cl.: B23B 29/04

(54) **Schnellspannvorrichtung insbesondere für Werkzeuge**

(30) Priorität: 04.05.1999 DE 19920407
(71) Anmelder: ESA Eppinger GmbH, 73770 Denkendorf (DE)
(72) Erfinder: Judas, Joel, 72669 Unterensingen (DE)
(74) Vertreter: Patentanwälte Rüger, Barthelt & Abel

(57) **Zusammenfassung**

Eine Schnellspannvorrichtung insbesondere für Werkzeuge weist einen in einem Gehäuse (1) angeordneten Spannmechanismus auf, durch den ein Werkzeug-Spannmittel zwischen einer Spannstellung und einer Läsestellung verstellbar ist. Der Spannmechanismus ist in der Spannstellung des Spannmittels selbsthemmend ausgebildet und weist wenigstens ein in dem Gehäuse (1) im Wesentlichen axial verstellbares Betätigungselement (29) auf, das an einem im Bereich der dem Spannmittel zugeordneten Werkzeug-Aufnahme (12) liegenden Endteil (30) mit einer Verstelleinrichtung gekuppelt oder kuppelbar ist.

## Beschreibung

Die Erfindung betrifft eine Schnellspannvorrichtung insbesondere für Werkzeuge, mit einem Gehäuse, einer Aufnahme für ein Spannteil eines zu spannenden Werkzeuges oder dergleichen, einem in dem Gehäuse angeordneten, der Aufnahme zugeordneten Spannmittel das zum Zusammenwirken mit einem in die Aufnahme eingesetzten Spannteil eingerichtet ist und mit einem dem Spannmittel zugeordneten Spannmechanismus in dem Gehäuse, durch den das Spannmittel zwischen einer Spannstellung und einer Lösestellung verstellbar ist.

Bei modernen Werkzeugmaschinen werden häufig modulare Schnellwechselsysteme für die Werkzeuge verwendet, die es erlauben einerseits den Werkzeugwechsel mit geringem Zeitaufwand durchzuführen und andererseits sicherzustellen, dass ohne zusätzlich Justier- oder Einrichtarbeiten das neu eingewechselte Werkzeug mit hoher Präzision gespannt wird, so dass sich auch eine einwandfrei Reproduzierbarkeit der bearbeiteten Werkstücke ergibt. Um dieses Ziel zu erreichen ist die sogenannte Schnittstelle zwischen dem Werkzeug und der Spannvorrichtung zweckentsprechend gestaltet, wobei in der Praxis eine ganze Reihe von unterschiedlichen Ausbildungen dieser Schnittstelle bekannt geworden und gebräuchlich sind. Ein Beispiel für ein derartiges modulares Schnellwechselwerkzeugsystem ist in der EP 0 294 348 A1 beschrieben. Die Werkzeuge sind dabei jeweils mit einem zapfenartigen Spannteil ausgebildet, mit dem sie in eine entsprechend gestaltete, kegelförmige, polygone Aufnahme der Spannvorrichtung eingesetzt sind, in der sie durch ein an dem Spannteil angreifendes Spannmittel lagerichtig gespannt und gehalten sind. Bei dem in der erwähnten Druckschrift erläuterten Spannsystem weisen die Spannmittel eine Spannbuchse auf, die durch eine koaxiale Zugstange radial aufgespreizt und in eine entsprechende Spannrille des Werkzeugschaftes eingepresst wird. Das Werkzeug wird dabei mit großer Spannkraft in die Aufnahme hereingezogen, wobei die Kupplung vorgespannt wird. Anstelle der Spannbuchse kann auch ein Spannbolzen verwendet werden.

Die Betätigung der Zugstange zum Spannen und Lösen des Werkzeuges erfolgt entweder über eine koaxiale Schraube, die von der der Aufnahme gegenüberliegenden Stirnseite des Gehäuses der Spannvorrichtung aus für einen Schraubenschlüssel zugänglich ist oder über ein Exzentergetriebe mit einer quer zu der Achse der Aufnahme ausgerichteten Antriebswelle. Diese querverlaufende Antriebswelle ist mit einem Innensechskant-Schlüsselansatz versehen, der von einer Seitenwand des Gehäuses der Spannvorrichtung aus von außen her zugänglich ist.

Wenn eine solche Spannvorrichtung beispielsweise als Werkzeughalter oder Spanneinheit zur Bestückung eines Werkzeugrevolvers ausgebildet ist, ist die der Aufnahme gegenüberliegende Stirnseite des Gehäuses mit dem Werkzeughalterschaft bzw. mit der Befestigungsfläche für die Betätigung einer Spannschraube im montierten Zustand des Werkzeughalters nicht mehr zugänglich. Die Betätigung des Spannmittels von einer Gehäuseseite her ist bei Werkzeugrevolvern, die mit vielen eng aneinander gerückten Werkzeughaltern bestückt sind, behindert oder nicht mehr einfach möglich. Außerdem tritt bei Sternrevolvern, bei denen die Werkzeughalter oder Spannsysteme am Umfang des im Wesentlichen zylindrischen Revolverkörpers angeordnet sind, die Problematik auf, dass die axiale Länge der Gehäuse der Werkzeughalter oder Spanneinheiten ein bestimmtes, verhältnismäßig kleines Maß mit Rücksicht auf die in der Werkzeugmaschine gegebenen Platzverhältnisse nicht überschreiten darf. Auch sind seitliche Öffnungen in dem Gehäuse des Werkzeughalters, durch die beispielsweise eine Betätigungswelle für das Spannmittel für ein Verstellwerkzeug zugänglich sind, häufig unerwünscht.

Aufgabe der Erfindung ist es deshalb, eine Schnellspannvorrichtung insbesondere für Werkzeuge zu schaffen, die sich durch geringen Platzbedarf und einfachen, betriebssicheren Aufbau auszeichnet, wobei eine lagerichtige, präzise Spannung der Werkzeuge oder dergleichen gewährleistet ist.

Zur Lösung dieser Aufgabe weist die erfindungsgemäße Schnellspannvorrichtung die Merkmale des Patentanspruch 1 auf.

Das der Aufnahme zugeordnete Spannmittel, das zum Zusammenwirken mit einem in die Aufnahme eingesetzten Spannteil des Werkzeuges oder dergleichen eingerichtet ist, kann an sich beliebig zweckentsprechend gestaltet sein. Es kann jedes der bekannten modularen Schnittstellensysteme Verwendung finden, das durch einen in dem Gehäuse angeordneten Spannmechanismus zwischen einer Spannstellung und einer Lösestellung verstellbar ist. Dabei ist aber der Spannmechanismus in der Spannstellung des Spannmittels selbsthemmend ausgebildet, wobei die Schnellspannvorrichtung wenigstens ein in dem Gehäuse im Wesentlichen axial verstellbares Betätigungselement aufweist, das an einem im Bereiche der Aufnahme liegenden Enteil mit einer Verstelleinrichtung gekuppelt oder kuppelbar ist.

In einer einfachen besonders zweckmäßigen Ausführungsform weist das wenigstens eine Betätigungselement auf einer der Aufnahme zugewandten Gehäusevorderseite Kupplungsmittel für ein die axiale Verstellung bewirkendes Verstellwerkzeug der Verstelleinrichtung auf. Das Gehäuse ist mit einer Einrichtung zur Abstützung des als doppelarmiger Hebel ausgebildeten Verstellwerkzeuges versehen, während das Verstellwerkzeug selbst am Ende eines Hebelarms mit den Kupplungsmitteln des wenigstens einen Betätigungselementes zusammenwirkend ausgebildet ist. Diese Ausbildung erlaubt es durch eine einfache Schwenkbewegung des auch als Spannschlüssel zu bezeichnenden Verstellwerkzeuges das Spannmittel der Schnellspannvorrichtung zu betätigen und damit von der Gehäusevorderseite her den für den Werkzeugwechsel erforderlichen Löse- und Spannvorgang durchzuführen. Wenn die Einrichtung zur Abstützung des Verstellwerkzeuges eine an dem Gehäuse ausgebildete Nut aufweist, die vorzugsweise als Profilnut mit einer Hinterschneidung ausgebildet ist, kann das Spannwerkzeug in jeder beliebigen Winkelposition angesetzt werden. Dies ist insbesondere dann von Bedeutung, wenn die Schnellspannvorrichtung für ein rotierendes Werkzeug eingerichtet ist. In diesem Fall ist die Aufnahme in einem in dem Gehäuse drehbar gelagerten Spindelteil angeordnet, das mit einer Einrichtung zur Kupplung mit einer Antriebsquelle ausgebildet ist. Diese Kupplungseinrichtung kann einen mit dem Spindelteil verbundenen und zu diesem koaxialen Wellenstummel aufweisen, der aus dem Gehäuse vorzugsweise abgedichtet herausgeführt oder durch eine Öffnung in diesem zur Kupplung mit der Antriebsquelle zugänglich ist. Bei der Ausbildung der Schnellspannvorrichtung als Werkzeughalter ist die Antriebswelle in der Regel in an sich bekannter Weise durch den für die Befestigung des Werkzeugträgers an einem Revolver, etc. vorgesehenen genormten Schaft geführt.

Die Betätigung des den Spannmechanismus steuernden, wenigstens einen Betätigungselementes kann nicht nur in der beschriebenen Weise durch ein Verstellwerkzeug manuell erfolgen. Die neue Schnellspannvorrichtung eignet sich auch für eine automatische Werkzeugspannung. Zu diesem Zwecke kann das Betätigungselement mit einem mit einem Druckmedium beaufschlagbaren Betätigungszylinder der Betätigungseinrichtung verbunden sein, der innerhalb des Gehäuses angeordnet ist und mit einer von außen in das Gehäuse führenden Druckmittelzuführeinrichtung in Verbindung steht.

Grundsätzlich sei an dieser Stelle erwähnt, dass die Verstelleinrichtung auch anders gestaltete Verstellelemente oder Kraftquellen aufweisen kann, die an dem Betätigungselement angreifen. Im Falle einer manuellen Betätigung müssen sie aber von der der Aufnahme zugeordneten Vorderseite des Gehäuses aus zugänglich sein.

Die neue Schnellspannvorrichtung eignet sich besonders für die Ausbildung von Werkzeughaltern für CNC-Drehmaschinen etwa zur Bestückung von Werkzeugrevolvern, einschliesslich Sternrevolvern. Sie kann aber auch ganz allgemein für Zwecke der Spanntechnik im Vorrichtungsbau Verwendung finden, wobei anstelle von Werkzeugen in besonderen Fällen auch Werkstücke und dergleichen gespannt werden können.

Weitere Ausbildungen der neuen Schnellspannvorrichtung sind Gegenstand von Unteransprüchen.

In der Zeichnung sind Ausführungsbeispiele des Gegenstandes der Erfindung dargestellt. Es zeigen:
- Fig. 1: einen Werkzeughalter mit einer Schnellspannvorrichtung gemäß der Erfindung in einer Seitenanansicht, teilweise aufgeschnitten;
- Fig. 2: den Werkzeughalter nach Fig. 1 in einer Seitenansicht mit angesetztem Verstellwerkzeug;
- Fig. 3: den Werkzeughalter nach Fig. 2 in einer Draufsicht auf die der Werkzeug-Aufnahme zugeordnete Vorderseite, mit angesetztem Verstellwerkzeug;
- Fig. 4: den Werkzeughalter nach Fig. 1, geschnitten längs der Linie IV-IV der Fig. 6 in einer Seitenansicht und in einem anderen Maßstab;
- Fig. 5: den Werkzeughalter nach Fig. 1, geschnitten längs der Linie V-V der Fig. 1 in einer Seitenansicht und im entspannten Zustand;
- Fig. 6: den Werkzeughalter nach Fig. 5 in einer entsprechenden Schnittdarstellung und im angespannten Zustand;
- Fig. 7 und Fig. 8: zwei Einzelheiten des Werkzeughalters nach Fig. 5 bzw. nach Fig. 6 unter Veranschaulichung des in der entspannten bzw. in der gespannten Stellung verrasteten Betätigungsrings, in einem anderen Maßstab im Ausschnitt und in einer Seitenansicht;
- Fig. 9: den Werkzeughalter nach Fig. 2 in einer vereinfachten, schematischen Schnittdarstellung unter Veranschaulichung des Vorgangs des Entspannens des Werkzeugs;
- Fig. 10: ein Kugelgesperre des Werkzeughalters nach Fig. 1, im Ausschnitt unter Veranschaulichung von fünf aufeinanderfolgenden Zuständen, ausgehend von dem gespannten Zustand bis zum gelösten Zustand, jeweils in einer Schnittdarstellung;
- Fig. 11: einen Werkzeughalter für ein feststehendes Werkzeug mit einer Schnellspannvorrichtung gemäß der Erfindung in einer Schnittdarstellung entsprechend Fig. 5 im entspannten Zustand;
- Fig. 12: den Werkzeughalter nach Fig. 11 im gespannten Zustand und in einer entsprechenden Schnittdarstellung;
- Fig. 13: den Werkzeughalter nach Fig. 11 in einer abgewandelten Ausführungsform mit hydraulischer Betätigung, in einer entsprechenden Schnittdarstellung und im entspannten Zustand und
- Fig. 14: den Werkzeughalter nach Fig. 13 im gespannten Zustand und in einer entsprechenden Schnittdarstellung.

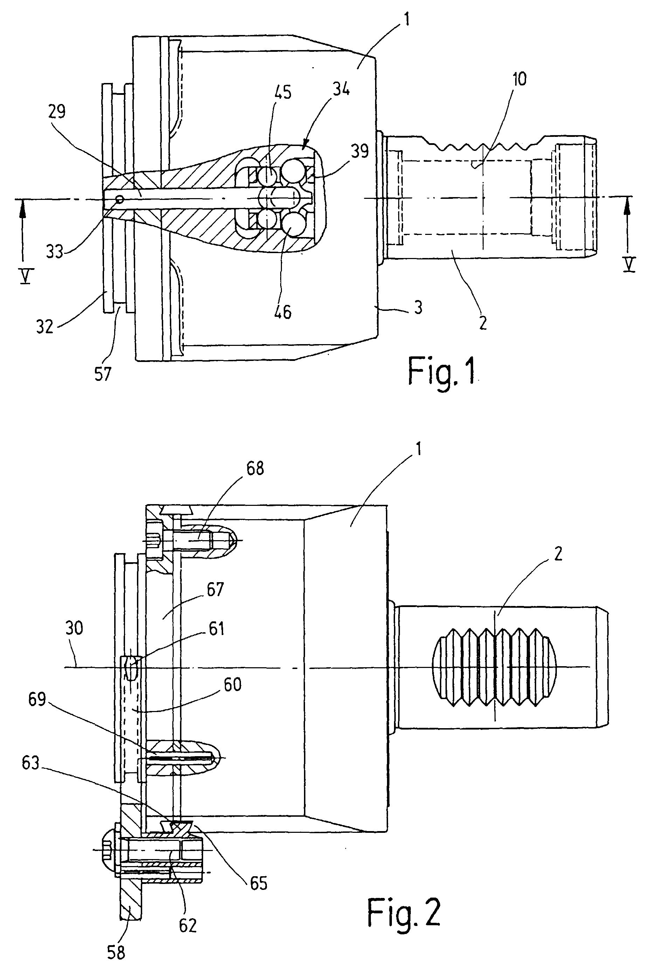

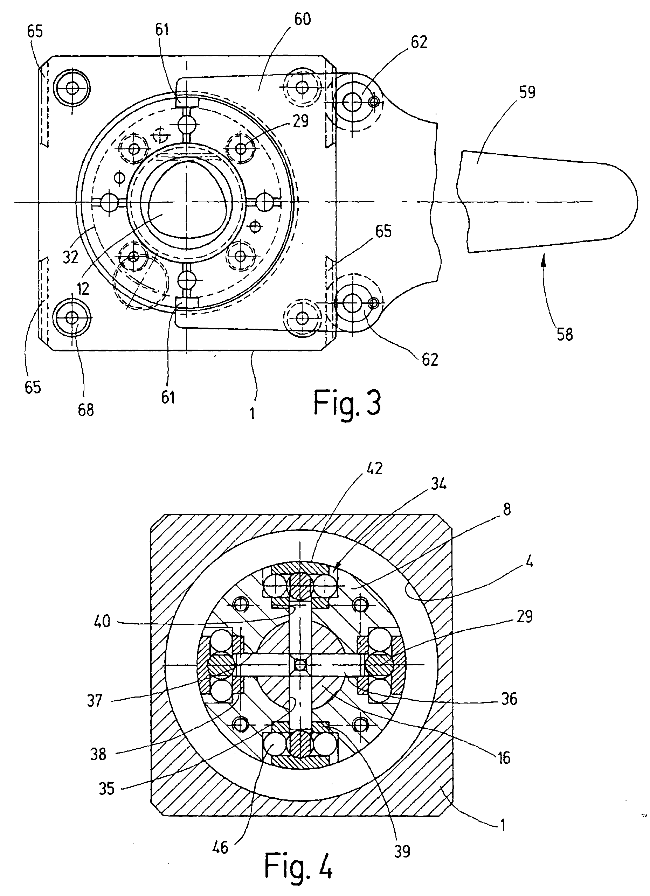

Der in den Fig. 1 bis 10 in einer ersten Ausführungsform dargestellte Werkzeughalter ist insbesondere zur Verwendung auf einem schaltbaren Werkzeugträger bspw. einem Werkzeugrevolver bestimmt. Er kann aber grundsätzlich, worauf der Ordnung halber hingewiesen sei, auch auf einem nicht schaltbaren, d.h. feststehenden Werkzeugträger eingesetzt werden. Er ist zur Aufnahme eines umlaufenden Werkzeuges bspw. eines Bohrwerkzeuges bestimmt, das von einer Antriebsquelle im Bereiche des Werkzeugträgers antreibbar ist. Der Werkzeughalter ist mit einer erfindungsgemäßen Schnellspannvorrichtung für das Werkzeug ausgebildet, deren Einzelheiten im Nachfolgenden beschrieben werden. Bei der dargestellten Ausführungsform ist der Werkzeughalter mit einem im Querschnitt quadratischen Gehäuse 1 (Fig. 4) ausgebildet, das auf seiner Rückseite einen koaxialen Aufnahmeschaft 2 trägt, der in eine entsprechende Aufnahmebohrung, bspw. einer Werkzeugrevolverscheibe eingesetzt werden kann. Der Aufnahmeschaft 2 ist in seinen Abmessungen genormt. Es gibt auch Ausführungsformen bei denen der Aufnahmeschaft 2 weggelassen ist und das Gehäuse als Spanneinheit unmittelbar mit seiner ebenen Rückseite 3 auf eine entsprechende Aufnahmefläche eines Werkzeugträgers aufsetzbar und mit diesem bspw. verschraubbar ist.

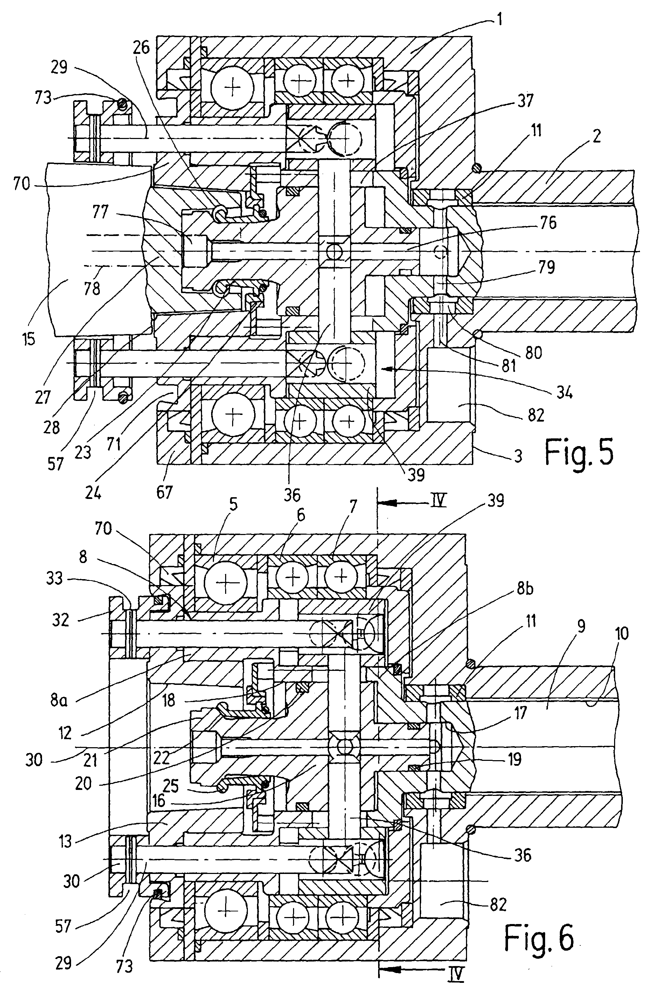

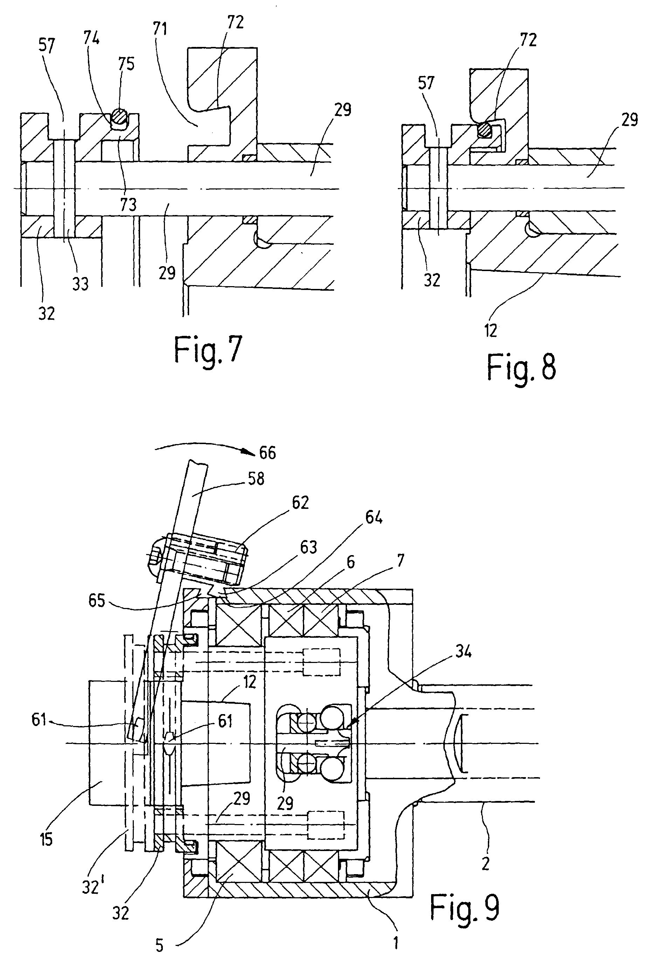

Der Werkzeughalter ist mit einer erfindungsgemäßen Schnellspannvorrichtung für ein zu spannendes Werkzeug ausgebildet, die in einer zylindrischen, koaxialen Gehäusebohrung 4 untergebracht ist. In der Gehäusebohrung 4 ist in der insbesondere aus den Fig. 5, 6 ersichtlichen Weise über Rillenkugellager 5, 6, 7 ein Spindelteil in Gestalt eines im Wesentlichen zylindrischen Spindelkörpers 8 drehbar gelagert, der mit zwei zu einander koaxialen und drehfest miteinander verschraubten Teilen 8a, 8b zweiteilig ausgebildet ist und an dessen unteres Teil 8b eine Werkzeug-Antriebswelle 9 angeformt ist, die in einer koaxialen Bohrung 10 des Aufnahmeschaftes 2 abgedichtet aufgenommen ist. Die zugehörigen Dichtungen sind bei 11 angedeutet. Mit dem im Wesentlichen hohlzylindrisch ausgbildeten Spindelkörper 8 ist eine eine Werkzeugaufnahme 12 enthaltende Werkzeug-Aufnahmehülse 13 drehfest verschraubt, die in den koaxialen Spindelkörper 8 ragt und, wie aus Fig. 3 zu ersehen eine polyonale Querschnittsgestalt aufweist. Die Aufnahme 12 ist in Achsrichtung zu der Antriebswelle 9 hin sich verjüngend, leicht konisch ausgebildet und dient zur Aufnahme des entsprechend gestalteten Spannschaftes eines bspw. in Fig. 9 bei 15 schematisch angedeuteten Werkzeugs.

Koaxial zu der Werkzeugaufnahme 12 ist in dem Spindelkörper 8 ein ein Spannmittel bildendes, koaxiales Spannelement 16 angeordnet, das in einer zylindrischen, koaxialen Stufenbohrung 17, 18 des Spindelkörpers 8 längsverschieblich gelagert ist. Das Spannelement 16 ist an seinen zylndrischen Umfangsflächen durch Dichtungen 19, 20 gegen die Wandung der Stufenbohrung 17, 18 abgedichtet.

Auf seiner der Werkzeugaufnahme 12 zugewandten Stirnseite trägt das Spannelement 16 einen angeformten, koaxialen Spannzapfen 21, der innerhalb der Aufnahme 12 liegt und mit einer umlaufenden Kegelfläche 22 versehen ist. Auf den Spannzapfen 21 ist eine axial geschlitzte Spannhülse 23 aufgesetzt, die bei 24 axial abgestützt ist und die an ihrem freien Rand einen Wulst 25 trägt, der gegen die Kegelfläche 22 axial abgestützt ist.

Wird das Spannelement 16, ausgehend von der in Fig. 5 dargestellten, gelösten oder entspannten Stellung in die gespannte Stellung nach Fig. 6 verschoben, so spreizt die auf den geschlitzten Wulst 25 auflaufende Kegelfläche 22 die Spannhülse 23 radial nach außen mit der Folge, dass der Wulst 25 in eine Spannrille 26 des Spannteiles 27 des bei 15 schematisch angedeuteten zu spannenden Werkzeugs eindringt (Fig. 5) und den Spannzapfen 21 formschlüssig mit dem Spannschaft 27 verriegelt. Bei der fortgesetzter, nach rechts (bezogen auf Fig. 5) gerichteten Bewegung des Spannelements 16 wird der Spannschaft 27 in die Aufnahme 12 hineingezogen bis er mit einer Planfläche 28 an der Werkzeug-Aufnahmehülse 13 anliegt.

Diese beschriebene Ausbildung der Schnittstelle Werkzeug 15/ Spannelement 16 ist an sich bekannt und in der EP 0 294 348 A1 und in anderen Druckschriften im Einzelnen erläutert. Sie bildet keinen Teil der vorliegenden Erfindung und kann auch durch andere Gestaltungen der Schnittstelle ersetzt werden.

Die Verstellung des das Spannmittel bildenden Spannelementes 16 zwischen der Lösestellung nach Fig. 5 und der Spannstellung nach Fig. 6 - und umgekehrt - erfolgt durch einen Spannmechanismus, der in dem Gehäuse 1 untergebracht ist und vier Betätigungselemente in Gestalt von zylindrischen Spannstiften 29 aufweist, die parallel zu der Achse 30 des Spannelementes 16 und der Aufnahme 12 ausgerichtet in dem Spindelkörper 8 längsverschieblich gelagert sind. Wie bspw. aus Fig. 4 zu ersehen, sind die vier Spannstifte 29 mit ihren Achsen auf einem gemeinsamen, zu der Achse 30 koaxialen Kreis liegend gleichmäßig verteilt angeordnet. Sie sind mit ihren aus dem Gehäuse 1 herausgeführten und damit im Bereich der Aufnahme 12 liegenden Endteilen 30 mit einem zu der Achse 30 koaxialen, als Druckring ausgebildeten Betätigungsring 32 starr verbunden, dessen Innendurchmesser so gewählt ist, dass er den Durchtritt des Spannschaftes 27 bzw. des Grundkörpers des Werkzeug 15 gestattet (Fig. 5). Zur Verbindung sind die Spannstifte 29 mit dem Betätigungsring 32 jeweils bei 33 verstiftet. Jeder der Spannstifte 29 ist an seinem dem Betätigungsring 32 abgewandten Endbereich über ein Kugelgesperre 34, das einen Teil des Spannmechanismus bildet mit dem Spannmittel in Gestalt des Spannelementes 16 gekuppelt:

Wie beispielsweise aus den Fig. 4, 5 und 6 zu ersehen, weist das Spannelement 16 vier in einer gemeinsamen Ebene liegende, rechtwinklig zueinander stehende Bohrungen 35 auf, in die vier, jeweils um 90° gegeneinander versetzte Zylinderstifte 36 eingepresst sind, die über das zylindrische Spannelement 16 radial vorragen. Die vorragenden Enden der Zylinderstifte 36 sind im Schiebesitz in Längsschlitzen 37 der Wandung des Unterteils 8b des Spindelkörpers 8 aufgenommen, so dass sie eine drehfeste aber axial verstellbare Kupplung des Spannelementes 16 mit dem Spindelkörper 8 herstellen. Die Länge der Zylinderstifte 36 ist dabei derart bemessen, dass sie mit ihren radial außen liegenden Enden in nutenartige Ausnehmungen 38 des Spindelkörpers 8 ragen, die symmetrisch zu den Achsen der zylinderstifte 36, von der zylindrischen Umfangsfläche des Spindelkörpers 8 ausgehend, in dem Spindelkörper 8 vorgesehen sind. In jeder der vier zueinander parallelen und jeweils um 90° gegeneinander versetzten Aussparungen 38 ist ein im Wesentlichen quaderförmiger Nutenstein 39 axial verschieblich gelagert. Die Nutensteine 39 sind mit dem Spannelement 16 dadurch formschlüßig gekuppelt, dass jeder der Zylinderstifte 36 in eine zugeordnete Bohrung 40 seines zugeordneten Nutensteins 39 eingepasst ist. Das Spannelement 16 macht deshalb zwangsläufig eine Axialbewegung der vier Nutensteine 39 mit, deren Bewegungsweg auf der einen Seite durch einen Anschlag an dem Oberteil 8a und auf der anderen Seite durch die Anlage des Betätigungsringes 32 an der Werkzeug-Aufnahmehülse 13 begrenzt ist. Auf ihrer der Bohrung 40 gegenüberliegenden Außenseite sind die Nutensteine 39 jeweils mit einer Zylinderfläche 42 (Fig. 4) ausgebildet mit der sie eng toleriert an dem Kugellagerinnenring der Kugellager 6, 7 längsverschieblich geführt und abgestützt sind.

Der spezielle Aufbau der Kugelgesperre 34 ergibt sich insbesondere aus den Fig. 4 bis 6 und 10:

Jeder der Nutensteine 39 weist beidseitig des zugehörigen Spannstiftes 29 liegend paarweise einander zugeordnete Kugelaufnahmebohrungen 43, 44 auf, von denen die Kugelaufnahmebohrungen 43 zwei Kugeln 45 kleineren Durchmessers und die Kugelaufnahmebohrungen 44 zwei Kugeln 46 größeren Durchmessers radial beweglich geführt enthalten. Den auf zwei gegenüberliegenden Seiten mit den zugeordneten Spannstift 29 zusammenwirkenden Kugeln 45, 46 ist eine in dem Spindelkörper 8 ausgebildete Kulisse 47 zugeordnet, die zwei durch einen zylindrischen Wandabschnitt 48 voneinander getrennte ringnutenartige Vertiefungen 49, 50 aufweist.

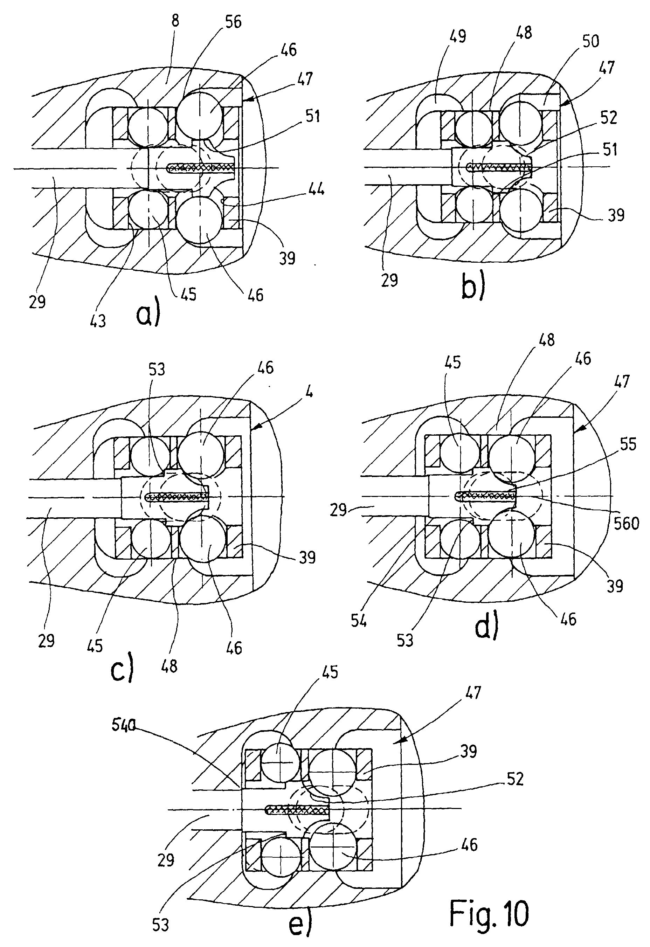

Auf der den Kugeln 45, 46 zugewandten Seite ist jeder Spannstift 29 in seinem Endbereich mit einer radial vorstehenden Klemmfläche 51 ausgebildet, die leicht kegelförmig ist, wobei ihrer größerer Basisdurchmesser auf dem der freien Stirnfläche des Spannstiftes 29 zugewandten Seite liegt. An dieser Seite schliesst sich an die Klemmfläche 51 eine koaxiale, im Querschnitt etwa teilkreisförmige Steuerfläche 52 an, die sich zu der Stirnseite des Spannstiftes 29 hin verjüngt. Auf der anderen Seite ist die Klemmfläche 51 durch eine Steuerkante 53 begrenzt, an die sich ein zylindrischer Flächenbereich 54 anschliesst, dessen Durchmesser so bemessen ist, dass bei in der Stellung c) nach Fig. 10 stehendem Spannstift 29 die kleineren Kugeln 45 zwischen dem geraden Wandabschnitt 48 und der zylindrischen Fläche 54 mit geringem Spiel aufgenommen sind. Ausgehend von seiner freien Stirnseite ist der Spannstift 29 außerdem mit einem Längsschlitz 55 versehen, der mit einem elastischen Material, beispielsweise Kautschuk gefüllt ist, wie dies bei 560 angedeutet ist.

Die Funktion der Klemmgesperre 34 ist in fünf Phasen a bis e in Fig. 10 veranschaulicht:

In dem der in Fig. 6 dargestellten Spannstellung entsprechenden Zustand "a" sind die größeren Kugeln 46 jedes Klemmgesperres 34 durch die zugeordnete Klemmfläche 51 radial nach außen gedrückt, wobei die Kugeln 46 in die Vertiefungen 50 der Kulisse 47 eingepresst und gegen den Spindelkörper 8 bei 56 axial abgestützt sind. Der Betätigungsring 32 liegt auf der Werkzeug-Aufnahmehülse 13 auf, so dass die Kugeln 46 unter Vorspannung stehend formschlüssig gegen den Spindelkörper 8 verriegelt sind. Die kleineren Kugeln 45 sind zwischen dem geraden Wandabschnitt 48 und der zylindrischen Fläche 54 des Spannstiftes 29 aufgenommen. Da die Klemmfläche 51, wie erwähnt, konisch ausgebildet ist, d. h. sich keilförmig verjüngt, sind die Spannstifte 29 in dieser Spannstellung selbsthemmend gehalten. Dadurch sind auch die Nutensteine 39 und mit diesen das Spannelement 16 lagefest in der Spannstellung verriegelt, in der die Spannhülse 23 nach außen gespreizt und mit ihrem Wulst 25 in die Spannrille 26 des vollständig in die Werkzeug-Aufnahme 12 gezogenen Spannschaftes 27 eingepresst ist.

Um ausgehend von dieser Spannstellung die Werkzeugspannung zu lösen, wird der Betätigungsring 32, bezogen auf Fig. 6 bezüglich des Gehäuses 1 nach links bewegt. Dabei wird zunächst mit einem größeren Kraftaufwand die Selbsthemmung dadurch überwunden, dass die keilförmig sich erweiternde Klemmfläche 51 zwischen den beiden größeren Kugeln 46 durchgezogen wird. Wegen des Längsschlitzes 55 ist der Spannstift 29 in seinem Endbereich elastisch nachgiebig, so dass die Klemmfläche 51 zwischen den Kugeln 46 "durchschnappen" kann. Das Klemmgesperre 34 jedes der Spannstifte 29 geht in den Zustand nach Fig. 10b über. Im weiteren Verlauf der nach links gerichteten Lösebewegung des Betätigungsringes 32 werden die Spannstifte 29 weiter aus dem Gehäuse 1 herausgezogen, mit der Folge, dass die größeren Kugeln 46 nunmehr in den Bereich der sich verjüngenden Steuerflächen 52 gelangen. Die Nutensteine 39 werden bei dieser nach links gerichteten Bewegung der Spannstifte 29 durch deren Steuerkante 53 im Zusammenwirken mit den kleineren Kugeln 45 mitgenommen, d.h. ebenfalls nach links bewegt, womit die größeren Kugeln 46, von der Kulisse 47 gesteuert, auf den Steuerflächen 52 radial nach innen rollen können, wie dies mit den Bewegungsphasen nach Fig. 10c und 10d veranschaulicht ist.

Bei weiter fortgesetzter Lösebewegung des Betätigungsringes 32 gehen die größeren Kugeln 46 schliesslich radial so weit nach innen, dass sie auf den geraden Wandabschnitt 48 auflaufen, während die Verstellbewegung der Spannstifte 29 dadurch begrenzt wird, dass diese mit einer Ringschulter 540 an dem Oberteil 8b des Spindelkörpers 8 anschlagen, wie dies Fig. 10e zeigt. Damit ist die Lösestellung nach Fig. 5 erreicht, in der die Spannhülse 23 entspannt und die Spannrille 26 des Spannschaftes 27 des Werkzeugs 15 freigegeben ist, wobei in der letzten Bewegungsphase des Spannelementes 16 dieses mit seiner Stirnfläche auf den Boden der die Spannrille 26 enthaltenden Ausnehmung des Spannzapfens 27 aufläuft und damit diesen aus der Werkzeugaufnahme 12 herausdrückt, so dass das Werkzeug 15 aus dem Werkzeughalter entnommen werden kann. Das Spannen eines mit seinem Spannschaft 27 in die Werkzeug-Aufnahme 12 eingesetzten Werkzeuges 15 geschieht in entsprechender Weise, wobei die Bewegungsphasen der Fig. 10 in der umgekehrten Richtung durchlaufen werden.

Die zum Lösen und Spannen des geschilderten Spannmechanismus erforderliche Längsbewegung der Spannstifte 29 wird durch eine Verstelleinrichtung bewirkt, die den Betätigungsring 32 umfasst und anhand der Fig. 2, 3 und 9 am besten zu verstehen ist:

Der Betätigungsring 32 weist auf einem in der Spannstellung außerhalb des Gehäuses 1 liegenden Umfangsbereich eine Ringnut 57 (Fig. 5, 6) auf. Er bildet ein Betätigungselement, das mit einem nach Art eines Spannschlüssels 58 ausgebildeten Verstellwerkzeug der Verstelleinrichtung kuppelbar ist. Der Spannschlüssel 58 ist mit einem Handgriff 59 (Fig. 3) und einem diesem gegenüberliegenden gabelförmigen Teil 60 ausgebildet, welches auf einander gegenüberliegenden Innenseiten zwei nach innen vorspringende Nasen 61 trägt, die in der aus den Fig. 3 und 9 ersichtlichen Weise in die Ringnut 57 des Betätigungsrings 32 einschiebbar sind. Die Anordnung ist dabei derart getroffen, dass bei lagerichtig angesetztem Spannschlüssel 58 die beiden Nasen 61 in einer Durchmesserebene des Betätigungsringes 32 einander gegenüber stehen. An dem Spannschlüssel 58 sind außerdem zwei beidseitig der Symmetrieachse im gleichen Abstand liegende Abstützelemente 62 (Fig. 9) angeschraubt, von denen jedes auf seiner den Nasen 61 zugewandten Innenseite einen im Querschnitt etwa schwalbenschwanzförmigen Fortsatz 63 trägt, der unten bei 64 abgerundet ist. Mit seinen beiden Fortsätzen 63 ist der Spannschlüssel 58 in der aus den Fig. 3, 9 zu entnehmenden Weise in zwei zugeordnete Schwalbenschwanznuten 65 an einer Seitenwand des Gehäuses 1 eingesetzt.

Bei in der Spannstellung nach Fig. 6 stehendem Spannmechanismus nimmt der Spannschlüssel 58 die in Fig. 2 dargestellte Stellung ein, in der er etwa rechtwinklig zu der Achse 30 des Werkzeughalters ausgerichtet ist. Zum Entspannen des Werkzeugs 15 wird der Spannschlüssel 58 um die durch seine Fortsätze 63 gebildete, quer zu der Achse 30 verlaufende Schwenkachse in der aus Fig. 9 ersichtlichen Weise im Uhrzeigersinn geschwenkt, wie dies durch einen Pfeil 66 angedeutet ist. Dabei wird der Betätigungsring 32 in bereits geschilderter Weise, bezogen auf Fig. 9 nach links bewegt, so dass der Spannmechanismus in den entsprechenden Zustand nach Fig. 5 übergeht.

Das Spannen und Lösen des Werkzeugs 15 geschieht somit durch eine einfache Schwenkbewegung des als doppelarmiger Hebel ausgebildeten Spannschlüssels 58, der in jeder Drehwinkellage des Spindelkörpers 8 und damit des Betätigungsringes 32 angesetzt werden kann, um den Betätigungsring 32 aus seiner Spannstellung in die Lösestellung 32' nach Fig. 9 - und umgekehrt - zu überführen. Die Schwalbenschwanznuten 65 und die keilförmige Ausbildung der Fortsätze 63 gewährleisten dabei, dass der Spannschlüssel 58 bei der Schwenkbewegung an dem Gehäuse 1 auch dann gehalten ist, wenn er bspw. von unten her angesetzt wird. Der Spannschlüssel 58 erlaubt somit eine besonders einfache manuelle Betätigung der Schnellspanneinrichtung des Werkzeughalters, die von der der Werkzeug-Aufnahme 12 zugeordneten Stirnseite des Gehäuses 1 her erfolgt und es damit erlaubt auf der Werkzeugrevolverscheibe einander benachbarte Werkzeugträger eng aneinander zu rücken.

Die im Vorstehenden anhand der Fig. 10 erläuterten Kugelgesperre 34 bewirken eine hohe Kraftverstärkung, d.h. mit bereits verhältnismäßig geringen, an dem Betätigungsring 32 angreifenden Stellkräften wird eine wesentlich größere Spannkraft an dem Spannelement 16 beim Spannen eines Werkzeugs erzielt. Gleichzeitig sind die Kugelgesperre 34 in den Endlagen der Nutensteine 39 selbsthemmend, so dass in der Regel keine zusätzlichen Maßnahmen zur Sicherung der Spannstellung getroffen werden müssen. Solche zusätzlichen Sicherungsmaßnahmen können aber erforderlich oder angezeigt sein, wenn der Werkzeughalter bspw. in einem Sternrevolver am Umfang der Revolverscheibe eingesetzt wird, wo hohe Fliehkräfte auf dem Betätigungsring 32 zur Einwirkung kommen. Ein Beispiel für derartige Sicherungsmaßnahmen ist aus den Fig. 5, 6 und insbesondere 7, 8 zu entnehmen:

Auf das Gehäuse 1 ist stirnseitig ein Abschlußring 67 aufgesetzt, der mit dem Gehäuse 1 über Schrauben 68 und Stifte 69 (Fig. 2) verbunden ist und der ein Dichtungselement 70 enthält (Fig. 6) mit dem das Innere des Gehäuses 1 gegenüber dem Umfang der Werkzeug-Aufnahmehülse 13 abgedichtet ist. In einen an sich radial nach innen zu anschliessenden Radialflansch der Werkzeug-Aufnahmehülse 13 ist eine sich zur Gehäusevorderseite hin öffnende koaxiale Ringnut 71 eingearbeitet, deren eine Seitenfläche 72 hinterschnitten ist. In die Ringnut 71 passt ein an den Betätigungsring 32 angeformter Ringsteg 73, der an seiner Außenumfangsfläche mit einer umlaufenden Nut 74 versehen ist, in die ein Sprengring 75 aus Stahl (Fig. 7) lose eingelegt ist. Beim Übergang des Betätigungsringes 32 aus der Lösestellung nach Fig. 7 in die Spannstellung nach Fig. 8 tritt der Ringsteg 73 in die Ringnut 71 ein, wobei der Sprengring 75 mit der hinterschnittenen Wand 72 verrastet, so dass eine zusätzliche Sicherheit gegen eine nach links gerichtete Bewegung (bezogen auf Fig. 8) des Betätigungsringes 32 gegeben ist.

Da die Spann- und Lösebewegung des Spannelementes 16 durch die an seinem Umfang angeordneten Nutensteine 39 über die als Betätigungselemente wirkenden Spannstifte 29 erfolgt, kann in dem kreissymmetrischen Spannelement 16 eine Kühlmittelzuführeinrichtung für ein in der Aufnahme 12 gespanntes Werkzeug 15 untergebracht werden. Diese Kühlmittelzuführeinrichtung weist, wie aus den Fig. 5, 6 zu entnehmen, einen koaxialen Kühlmittelzufuhrkanal 76 in dem Spannelement 16 auf, der bei 77 zur Kupplung mit einem bei 78 angedeuteten Kühlmittelkanal in dem Werkzeug 15 eingerichtet ist und der über Querbohrungen 79 mit einer durch die Dichtungsringe 11 begrenzten gehäusefesten Verteilernut 80 in Verbindung steht, die über Kanäle 81 mit einem Anschlußfitting 82 im Gehäuseboden verbunden ist.

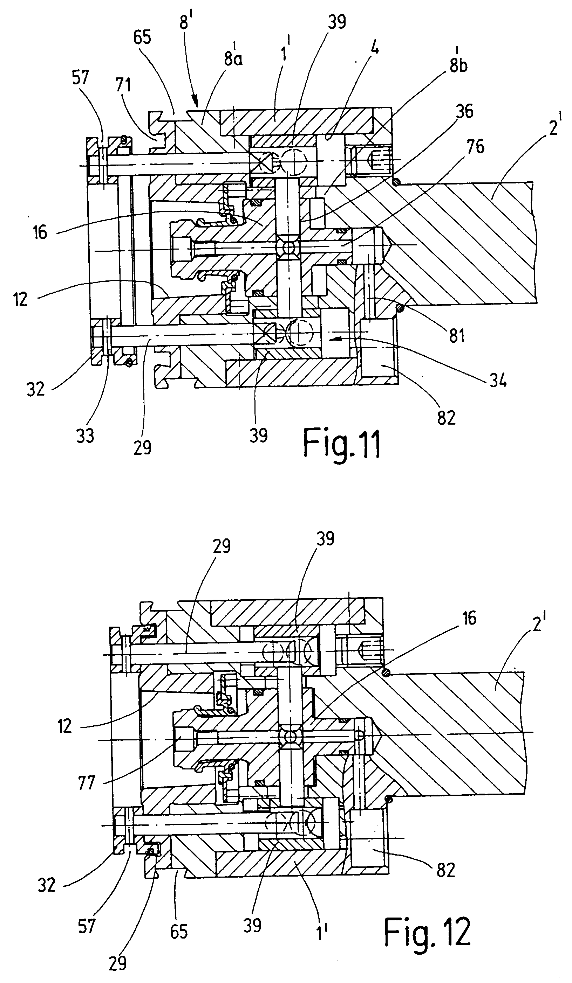

Während im Vorstehenden anhand der Fig. 1 bis 10 ein Ausführungsbeispiel der neuen Schnellspannvorrichtung in der Verwendung bei einem Werkzeughalter für umlaufende Werkzeuge erläutert wurde, ist in der Fig. 12 ein Werkzeughalter veranschaulicht, der, mit einer erfindungsgemäßen Schnellspannvorrichtung ausgebildet, zur Aufnahme feststehender Werkzeuge eingerichtet ist. Der grundsätzliche konstruktive Aufbau der Werkzeug-Aufnahme 12, des Spannelementes 16 der Nutensteine 39 und der Kugelgesperre 34 mit den diesen zugeordneten Spann- und Konstruktionselementen ist gleich wie in den Fig. 5, 6. Gleiche Teile sind deshalb mit gleichen Bezugszeichen versehen und nicht nochmals erläutert. Während aber bei der Ausführungsform nach den Fig. 5, 6 das Spannelement 16 in dem Spindelkörper 8 angeordnet ist, der seinerseits in dem Gehäuse 1 drehbar gelagert ist, ist bei der Ausführungsform nach den Fig. 11, 12 die Anordnung derart getroffen, dass das wiederum zweiteilig mit einem Oberteil 8'a und einem Unterteil 8'b ausgebildete, der Einfachheit halber ebenfalls als Spindelkörper 8' bezeichnete in die zylindrische Bohrung 4 des Gehäuses 1' eingesetzte zylindrische Teil unmittelbar mit dem Gehäuse 1' verschraubt ist. Das untere Teil 8'b trägt einen massiv ausgebildeten Aufnahmeschaft 2'. Der Gehäuseabschlußring 67 (Fig. 5) entfällt, so dass die Schwalbenschwanznuten 65 unmittelbar in das Oberteil 8'a des Spindelkörpers 8' und den Ringflansch der Werkzeug-Aufnahmebüchse 13 eingearbeitet sind.

Die Betätigung der Schnellspannvorrichtung geschieht mittels des Spannschlüssels 58 in der bereits anhand der Fig. 2, 9 geschilderten Weise.

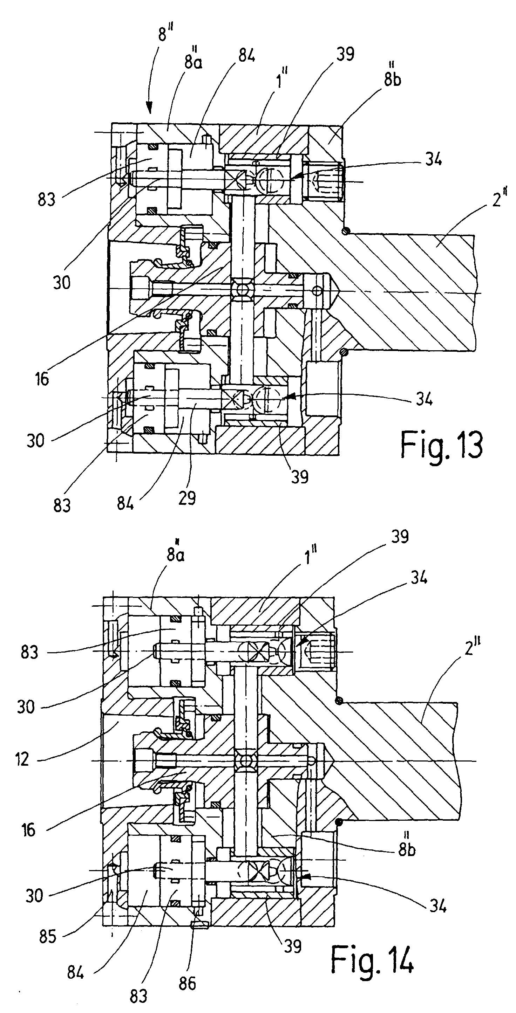

In den Fig. 13, 14 schliesslich ist noch eine abgewandelte Ausführungsform eines mit einer erfindungsgemäßen Schnellspannvorrichtung ausgebildeten Werkzeughalters für feststehende Werkzeuge dargestellt, die grundsätzlich ähnlich der Ausführungsform nach den Fig. 11, 12 gestaltet ist. Während aber bei der Ausführungsform nach den Fig. 11, 12 die Verstellung der als Betätigungselemente dienenden Spannstift 29 über dem Betätigungsring 32 und den Spannschlüssel 58 als Verstelleinrichtung erfolgt, sind bei der Ausführungsform nach den Fig. 13, 14 die Spannstifte 29 hydraulisch oder pneumatisch verstellbar, wozu die Spannstifte 29 mit ihrer Verstelleinrichtung dauernd gekuppelt sind. Diese Verstelleinrichtung weist druckmittelbeaufschlagte Kolben 83 auf, die mit den im Bereich der Werkzeug-Aufnahme 12 liegenden Endteilen 30 der von den Spannstiften 29 gebildeten Betätigungselemente verbunden sind und die in Zylinderkammern 84 abgedichtet längsverschieblich gelagert sind. Die Zylinderkammern 84 sind in dem Oberteil 8''a des Spindelkörpers 8'' ausgebildet, dessen Unterteil 8''b ähnlich wie das Unterteil 8'b in den Fig. 11, 12 gestaltet und mit dem Gehäuse 1'' verschraubt ist. Die miteinander über Ausgleichskanäle in Verbindung stehenden Zylinderkammern 84 können beidseitig der Kolben 83 über Druckmittelkanäle 85, 86 mit Druckmittel beaufschlagt bzw. entlüftet werden, um damit über die Spannstifte 29 und die Kugelgesperre 34 das Spannelement 16 in die Spannstellung oder die Lösestellung zu überführen.

Die Druckmittelkanäle 85, 86 sind in gehäusefesten Teilen angeordnet und von außen her an entsprechende Druckmittelversorgungseinrichtungen angeschlossen, die im Einzelnen nicht weiter dargestellt sind.

Die Ausführungsform nach den Fig. 13, 14 gestattet auch eine Fernsteuerung der Schnellspannvorrichtung. Ihr Konstruktionsprinzip kann auch auf die Ausführungsformen nach Fig. 5, 6 für umlaufenden Werkzeuge ohne weiteres übertragen werden. Grundsätzlich ist in diesem Zusammenhang zu erwähnen, dass naturgemäß auch andere Verstelleinrichtungen für die Spannstifte 29 denkbar sind, z.B. auch solenoidgesteuerte elektrische Verstelleinrichtungen, um nur ein weiteres Beispiel zu erwähnen. Im Übrigen sind auch bei der Ausführungsform nach den Fig. 13, 14 mit vorher schon geschilderten Ausführungsformen gleiche Teile mit gleichen Bezugszeichen versehen und nicht nochmals erläutert.

Allen beschriebenen Ausführungsformen gemeinsam ist die Lagerung der unterhalb der Aufnahme 12 liegenden Nutensteine 39 zur Übertragung der Spannkräfte auf eine innere Kupplungs- oder Spannmechanik. Die neue Schnellspannvorrichtung zeichnet sich ersichtlich durch einfache Konstruktionselemente aus. Sie ist raumsparend und arbeitet mit einem Spannmechanismus, der in den Endlagen selbsthemmend ist und eine hohe Kraftverstärkung aufweist. Darüberhinaus ergibt sich eine insgesamt geschlossene Lagergehäusekonstruktion, die mit einer kurzen Baulänge und der Möglichkeit einfacher Betätigung des Spannmechanismus einhergeht. Auf die günstige zentrale Kühlmittelduchführung zu den Werkzeugen wurde bereits hingewiesen.

## Patentansprüche

1. Schnellspannvorrichtung, insbesondere für Werkzeuge, mit einem Gehäuse (1), einer Aufnahme (12) für ein Spannteil (27) eines zu spannenden Werkzeuges (15) oder dergleichen, einem in dem Gehäuse angeordneten, der Aufnahme (12) zugeordneten Spannmittel (16), das zum Zusammenwirken mit einem in die Aufnahme eingesetzten Spannteil (27) eingerichtet ist und mit einem dem Spannmittel zugeordneten Spannmechanismus (34; 36, 39) in dem Gehäuse (1) durch den das Spannmittel zwischen einer Spannstellung und einer Lösestellung verstellbar ist, wobei der Spannmechanismus in der Spannstellung des Spannmittels selbsthemmend ausgebildet ist und wenigstens ein in dem Gehäuse (1) im Wesentlichen axial verstellbares Betätigungselement (29) aufweist, das an einem im Bereiche der Aufnahme (12) liegenden Endteil (30) mit einer Verstelleinrichtung gekuppelt oder kuppelbar ist.

2. Schnellspannvorrichtung nach Anspruch 1, dadurch gekennzeichnet, dass die Aufnahme (12) in einem in dem Gehäuse (1) drehbar gelagerten Spindelteil (8) angeordnet ist, das mit einer Einrichtung zur Kupplung mit einer Antriebsquelle ausgebildet ist.

3. Schnellspannvorrichtung nach Anspruch 2, dadurch gekennzeichnet, dass die Einrichtung zur Kupplung mit einer Antriebsquelle einen mit dem Spindelteil verbundenen und zu diesem koaxialen Wellenstummel (9) aufweist, der aus dem Gehäuse (1) herausgeführt oder durch eine Öffnung in diesem zur Kupplung mit der Antriebsquelle zugänglich ist.

4. Schnellspannvorrichtung nach Anspruch 3, dadurch gekennzeichnet, dass der Wellenstummel (9) gegenüber dem Gehäuse (1) abgedichtet ist.

5. Schnellspannvorrichtung nach einem der Ansprüche 2 bis 4, dadurch gekennzeichnet, dass das wenigstens eine Betätigungselement (29) in dem Spindelteil (8) axial verstellbar gelagert ist.

6. Schnellspannvorrichtung nach einem der Ansprüche 2 bis 5, dadurch gekennzeichnet, dass der Spannmechanismus in dem Spindelteil (8) angeordnet ist.

7. Schnellspannvorrichtung nach einem der Ansprüche 2 bis 6, dadurch gekennzeichnet, dass das Spindelteil (8) mit einer koaxialen Kühl- oder Schmiermittelzuführeinrichtung ausgebildet ist, die wenigstens einen im Bereiche der Aufnahme (12) mündenden Kühl- oder Schmiermittelkanal (76) aufweist.

8. Schnellspannvorrichtung nach einem der vorhergehenden Ansprüche, dadurch gekennzeichnet, dass das wenigstens eine Betätigungselement (29) auf einer der Aufnahme (12) zugewandten Gehäusevorderseite Kupplungsmittel (57) für ein die axiale Verstellung bewirkendes Verstellwerkzeug (58) der Verstelleinrichtung aufweist.

9. Schnellspannvorrichtung nach Anspruch 8, dadurch gekennzeichnet, dass das Gehäuse (1) eine Einrichtung zur Abstützung des als doppelarmiger Hebel ausgebildeten Verstellwerkzeuges (58) aufweist und dass das Verstellwerkzeug am Ende eines Hebelarms mit den Kupplungsmitteln (57) des wenigstens einen Betätigungselementes (29) zusammenwirkend ausgebildet ist.

10. Schnellspannvorrichtung nach Anspruch 9, dadurch gekennzeichnet, dass die Einrichtung zur Abstützung des Verstellwerkzeuges eine an dem Gehäuse (1) ausgebildete Nut (65) aufweist, die vorzugsweise als Profilnut mit einer Hinterschneidung ausgebildet ist.

11. Schnellspannvorrichtung nach einem der Ansprüche 1 bis 7, dadurch gekennzeichnet, dass das wenigstens eine Betätigungselement (29) mit einem mit einem Druckmedium beaufschlagbaren Betätigungszylinder (83, 84) der Verstelleinrichtung verbunden ist, der innerhalb des Gehäuses (1) angeordnet ist und mit einer von außen in das Gehäuse führenden Druckmittelzuführeinrichtung (85, 86) in Verbindung steht.

12. Schnellspannvorrichtung nach einem der vorhergehenden Ansprüche, dadurch gekennzeichnet, dass sie wenigstens zwei Betätigungselemente (29) aufweist, die jeweils an einem (30) ihrer Enden mit einem zu der Aufnahme (12) koaxialen Betätigungsring (32) verbunden sind, der gegenüber dem Gehäuse (1) axial verstellbar ist.

13. Schnellspannvorrichtung nach Anspruch 12, dadurch gekennzeichnet, dass der Betätigungsring (32) zumindest bei in der Spannstellung stehendem Spannmittel (16) lösbar verriegelt oder verrastet ist.

14. Schnellspännvorrichtung nach den Ansprüchen 8 und 13, dadurch gekennzeichnet, dass der Betätigungsring (32) die Kupplungsmittel (57) für das Verstellwerkzeug (58) trägt.

15. Schnellspannvorrichtung nach einem der vorhergehenden Ansprüche, dadurch gekennzeichnet, dass die Betätigungslemente (29) jeweils über ein Kugelgesperre (34) des Spannmechanismus mit dem Spannmittel (16) gekuppelt sind.

16. Schnellspannvorrichtung nach Anspruch 15, dadurch gekennzeichnet, dass jedes der bolzenartig ausgebildeten Betätigungselemente (29) an seinem dem Kugelgesperre (34) zugewandten Ende Steuerflächen (52, 53) für das ihm zugeordnete Kugelgesperre aufweist und dass das Kugelgesperre eine das Spannmittel betätigende, kugelgesteuerte Kulisse (47) enthält.

17. Schnellspannvorrichtung nach Anspruch 15, dadurch gekennzeichnet, dass das Betätigungselement (29) an seinem dem Kugelgesperre (34) zugeordneten Ende wenigstens eine im Zusammenwirken mit wenigstens einer Kugel (46) eine Selbsthemmung bewirkende Klemmfläche (51) trägt.

18. Schnellspannvorrichtung nach einem der Ansprüche 16 oder 17, dadurch gekennzeichnet, dass das Kugelgesperre (34) einen mit dem Spannmittel (16) gekuppelten, axial verschieblich gelagerten Nutenstein (39) aufweist, in dem Kugeln (45, 46) gelagert sind, die mit der Kulisse (47) zusammenwirken.

19. Schnellspannvorrichtung nach einem der vorhergehenden Ansprüche, dass sie als Werkzeughalter für feststehende oder angetriebene Werkzeuge (15) ausgebildet ist.
